(19) Europäisches Patentamt
European Patent Office
Office européen des brevets

(11) Veröffentlichungsnummer: **0 055 826**
**A1**

(12) # EUROPÄISCHE PATENTANMELDUNG

(21) Anmeldenummer: 81109710.4

(22) Anmeldetag: 16.11.81

(51) Int. Cl.³: C 08 G 59/62
C 08 G 18/06, C 09 D 5/40
C 25 D 13/06

(30) Priorität: 01.12.80 DE 3045251

(43) Veröffentlichungstag der Anmeldung: 14.07.82 Patentblatt 82/28

(84) Benannte Vertragsstaaten: AT BE CH DE FR GB IT LI NL SE

(71) Anmelder: BASF Farben + Fasern Aktiengesellschaft
Am Neumarkt 30
D-2000 Hamburg 70(DE)

(72) Erfinder: Hoppe, Karl, Dr.
Im Hain 15
D-4400 Münster(DE)

(72) Erfinder: Strauss, Udo, Dr.
Wüllnerstrasse 16
D-4400 Münster(DE)

(74) Vertreter: Habbel, Hans-Georg, Dipl.-Ing.
Postfach 3429 Am Kanonengraben 11
D-4400 Münster(DE)

(54) **Kunstharz in Form einer Metall-Komplex-Verbindung und Verwendung desselben zum kathodischen Elektrotauchlackierverfahren.**

(57) Ein Kunstharz in Form einer Metallkomplex-Verbindung wird gekennzeichnet durch ein Reaktionsprodukt von

(a) epoxidgruppenfreien Mannich-Basen aus
- ($a_1$) äthergruppenfreien kondensierten Phenolen mit mindestens zwei aromatischen Ringen und mindestens zwei phenolischen Hydroxylgruppen und/oder
- ($a_2$) äthergruppenhaltigen kondensierten Phenolen mit mindestens zwei aromatischen Ringen und mindestens einer phenolischen Hydroxylgruppe,
- ($a_3$) sekundären Aminen mit mindestens einer Hydroxyalkylgruppe, gegebenenfalls im Gemisch mit
- ($a_4$) sekundären Dialkyl- oder Dialkoxyalkylaminen ohne freie Hydroxylgruppen,
- ($a_5$) Formaldehyd oder Formaldehyd abspaltende Verbindungen

mit

(b) Epoxidharzen, wobei aus (a) und/oder (b) stammende aliphatische Hydroxylgruppen gegebenenfalls durch Umsetzung mit teilblockierten Isocyanaten mindestens teilweise in Urethangruppen überführt sind, in dem Metalle komplex gebunden sind.

EP 0 055 826 A1

27.11.1980
PAT 80 592

BASF Farben + Fasern Aktiengesellschaft, Hamburg

BEZEICHNUNG GEÄNDERT
siehe Titelseite

K U N S T H A R Z

Die Erfindung bezieht sich auf ein Kunstharz in Form einer Metall-Komplex-Verbindung. Es ist geeignet als filmbildende Komponente in einem Elektrotauchbad zum Herstellen von Überzügen auf elektrisch leitfähigen Substraten, die in einem Elektrotauchlackierverfahren als Kathode geschaltet sind.

Die Abscheidung von Kunstharzen mittels Kataphorese ist bekannt. Hierfür geeignet sind Reaktionsprodukte aus epoxidgruppenfreien Mannich-Basen und Epoxidharzen in protonisierter Form. (Vgl. DE-OS 2 751 499). Sie sind die filmbildende Komponente in Elektrotauchlacken und ergeben nach dem Einbrennen Überzüge mit gutem Korrosionsschutz. Allerdings ist in der Regel bei Eisenoberflächen eine Vorbehandlung durch Phosphatierung mit Zinkphosphat, Zinkcalciumphosphat oder Eisenphosphat erforderlich, um der zu beschichtenden Oberfläche einen ausreichenden Korrosionsschutz zu vermitteln und für eine genügend feste Haftung des abgeschiedenen Überzuges zu sorgen. Aufgrund der komplizierten Steuerung der verschiedenen Phosphatierverfahren ist eine solche Vorbehandlung störanfällig und mit starken Schwankungen hinsichtlich der Einhaltung des Schichtgewichtes und des Gefüges der Phosphatierschicht behaftet.

Aufgabe der vorliegenden Erfindung war es, die durch die normalerweise übliche Vorbehandlung auftretenden Nachteile zu beseitigen und gegebenenfalls auf die Vorbehandlung durch Phosphatieren ganz zu verzichten, ohne die Korrosionsschutzwirkung des Elektrotauchüberzuges zu verschlechtern.

Es wurde nun gefunden, daß die vorstehend erwähnten Nachteile vermieden werden können durch ein Kunstharz in Form einer Metall-Komplex-Verbindung, das gekennzeichnet ist durch ein Reaktionsprodukt von

(a) epoxidgruppenfreien Mannich-Basen aus

($a_1$) äthergruppenfreien kondensierten Phenolen mit mindestens zwei aromatischen Ringen und mindestens zwei phenolischen Hydroxylgruppen und/oder

($a_2$) äthergruppenhaltigen kondensierten Phenolen mit mindestens zwei aromatischen Ringen und mindestens einer phenolischen Hydroxylgruppe,

($a_3$) sekundären Aminen mit mindestens einer Hydroxyalkylgruppe, gegebenenfalls im Gemisch mit

($a_4$) sekundären Dialkyl- oder Dialkoxyalkylaminen ohne freie Hydroxylgruppen,

($a_5$) Formaldehyd oder Formaldehyd abspaltende Verbindungen

mit

(b) Epoxidharzen, wobei aus (a) und/oder (b) stammende aliphatische Hydroxylgruppen gegebenenfalls durch Umsetzung mit teilblokkierten Isocyanaten mindestens teilweise in Urethangruppen überführt sind, in dem Metalle komplexgebunden sind.

Bevorzugt geeignet sind solche Reaktionsprodukte, in denen Kupfer komplex gebunden ist. Die besten Ergebnisse werden erhalten, wenn 0,5 bis 0,6 Gewichtsteile Kupfer je 1000 Gewichtsteile Reaktionsprodukt komplex gebunden sind.

Eine andere bevorzugte Ausführungsform sieht vor, daß das Reaktionsprodukt mit dem komplex gebundenen Kupfer durch Säuren protonisiert ist.

Eine weitere Ausführungsform ist gekennzeichnet durch eine Absorptionsbande zwischen 350 und 500 nm.

Gegenstand der Erfindung ist ferner das Verfahren zur Herstellung des Kunstharzes, indem man eine Metallsalzlösung, insbesondere eine Kupfersalzlösung mit einer Lösung des Reaktionsproduktes in organischen Lösungsmitteln und/oder Wasser reagieren läßt.

Gegenstand der Erfindung ist außerdem die Verwendung des erfindungsgemäßen Kunstharzes zum Herstellen von Überzügen auf der Oberfläche von als Kathode geschalteten elektrisch leitfähigen Substraten durch kathodische Abscheidung aus einem Tauchbad in einem kathodischen Elektrotauchlackierverfahren und anschließendes Einbrennen des Überzuges.

Die erfindungsgemäßen Kunstharze lassen sich gleichmäßig bei einem PH-Wert zwischen 7 und höchstens 9 kathodisch abscheiden und ergeben nach kurzer Beschichtungszeit Überzüge mit hervorragenden mechanischen Eigenschaften nach dem Einbrennen, wie große Härte und Kratzfestigkeit bei guter Elastizität und fester Haftung auf dem Substrat. Der Korrosionsschutz auf Eisenmetallunterlagen ist außerordentlich gut. In vielen Fällen kann eine konventionelle Phosphatierung und die damit verbundenen Fehlerquellen entfallen. Auch Punktschweißnähte, die üblicherweise keine Phosphatierungslösung annehmen, werden durch die erfindungsgemäßen Kunstharze einwandfrei haftfest und korrosionssicher beschichtet.

Es wurde ferner gefunden, daß durch die Metallkomplexbildung die relativ labilen Gruppen des Reaktionsproduktes, nämlich die Diäthanolaminomethylengruppierung stabilisiert werden, was sich in einer längeren Lagerstabilität einer Harzlösung in organischen Lösungsmitteln und/oder Wasser auswirkt. Die Gruppen, über die die Vernetzung beim Einbrennen verläuft, werden fixiert und vororientiert.

Der Metallkomplex bewirkt aber auch eine bevorzugte Ausrichtung der vernetzenden Gruppen während des Abscheideverfahrens auf die Metalloberfläche hin, da das Kupfer des Metallkomplexes auf der Kathode mit dem Komplex abgeschieden wird. Dadurch entsteht auf der Kathode ein feinerer und dichter Überzug, dessen Oberfläche nach dem Einbrennen bei Temperaturen bis zu 200°C während einer Einbrenndauer von etwa 15 Minuten so glatt ist, daß eine einzige Decklackschicht ausreicht, um eine Lackierung mit gutem Aussehen zu erreichen.

Das Reaktionsprodukt aus epoxidgruppenfreien Mannich-Basen und Epoxidharzen, in dem Metalle komplex gebunden sind, liegt in dem Elektrotauchbad in protonisierter Form vor. Protonisiert wird dieses Produkt mit geeigneten anorganischen und/oder organischen Säuren, vorzugsweise wasserlöslichen Carbonsäuren und ist in protonisierter Form in Wasser löslich oder dispergierbar, bzw. mit Wasser mischbar und verdünnbar.Der pH-Wert der wäßrigen Lösung oder wäßrigen Dispersion wird auf einen Wert zwischen 7 und höchstens 9 eingestellt.

Geeignete Säuren sind praktisch alle bekannten anorganischen und organischen Säuren, wie z.B. Salzsäure, Schwefelsäure, Phosphorsäure, Kohlensäure, p-Toluolsulfonsäure, Essigsäure, Propionsäure, Ameisensäure, Zitronensäure, Milchsäure, Apfelsäure, Fumarsäure, Maleinsäure, Phthalsäure, sowie die Halbester der Fumarsäure, Maleinsäure und Phthalsäure mit einwertigen oder mehrwertigen aliphatischen Alkoholen, wie Methanol, Äthanol, Propanol, Äthylenglykol.

Die besten Ergebnisse werden erhalten mit Essigsäure, Milchsäure und Ameisensäure, die deshalb als bevorzugt geeignete Protonisierungsmittel vorgeschlagen werden.

Das erfindungsgemäße Kunstharz findet seine bevorzugte Verwendung in Überzugsmitteln für die kathodische Elektrotauchlackierung elektrisch leitfähiger Substrate, z.B. von Metallteilen aus Aluminium, Messing, Kupfer, Eisen,Stahl und Eisenlegierungen mit anderen Metallen, die gegebenenfalls chemisch vorbehandelt, z.B. phosphatiert sind.

Zur zweifelsfreien Kennzeichnung des erfindungsgemäßen Kunstharzes ist zu den einzelnen Komponenten folgendes zu sagen:

Die Herstellung der epoxidgruppenfreien Mannich-Basen (a) erfolgt aus

($a_1$) äthergruppenfreien kondensierten Phenolen mit mindestens zwei aromatischen Ringen und mindestens zwei phenolischen Hydroxylgruppen und/oder

($a_2$) äthergruppenhaltigen kondensierten Phenolen mit mindestens zwei aromatischen Ringen und mindestens einer phenolischen Hydroxylgruppe,

($a_3$) sekundären Aminen mit mindestens einer Hydroxyalkylgruppe, gegebenenfalls im Gemisch mit

($a_4$) sekundären Dialkyl- oder Dialkoxyalkylaminen ohne freie Hydroxylgruppen,

($a_5$) Formaldehyd oder Formaldehyd abspaltende Verbindungen.

Als äthergruppenfreie kondensierte Phenole mit mindestens zwei aromatischen Ringen und mindestens zwei phenolischen Hydroxylgruppen ($a_1$) kommen als besonders geeignet in Frage kondensierte Phenole der allgemeinen Formel

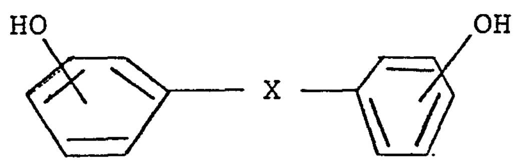

wobei die Hydroxylgruppen in ortho-oder para-Stellung zu X stehen und X ein geradkettiger oder verzweigter, zweiwertiger aliphatischer Rest mit 1 bis 3 Kohlenstoffatomen oder $SO_2$, SO oder

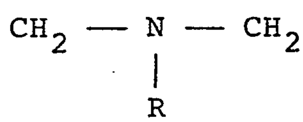

(mit R= Alkylrest mit 1 bis 6 C-Atomen) ist; vorzugsweise geeignet ist Bisphenol A. Auch niedrigmolekulare Umsetzungsprodukte aus Phenolen mit Formaldehyd, sogenannte Novolake können eingesetzt werden.

Gegebenenfalls können im Gemisch mit den kondensierten Phenolen $a_1$) oder auch anstelle dieser weitere kondensierte Phenole $a_2$) verwendet werden, die mindestens eine phenolische Hydroxylgruppe und darüber hinaus noch eine oder mehrere Äthergruppen im Molekül enthalten.

Diese Produkte besitzen die allgemeine Formel

$$HO - B - (O - E - O)_n - H$$

bzw.

$$HO - B - (O - E - O)_n - P$$

wobei B für den Rest

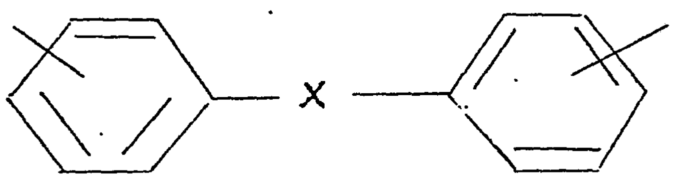

steht und X die oben angegebene Bedeutung hat, E für einen Hydroxylgruppen enthaltenden, durch Addition einer Epoxidverbindung an eine phenolische Hydroxylgruppe enthaltenden Rest, P für einen Phenyl- oder Alkylphenylrest, sowie n für eine ganze Zahl von 1 bis 3 steht, und wobei als Epoxidverbindungen (für E) bevorzugt Epoxidharze, wie z.B. Diglycidyläther von Bisphenol A, Pentaerythrit, Glycerin, Trimethylolpropan, Glykol, Glykoläther und anderer mehrwertiger, vorzugsweise zwei- bis vierwertiger Alkohole eingesetzt werden.

Sollen die kondensierten Phenole $a_2$) allein verwendet werden, so nimmt man zweckmäßigerweise solche auf Basis von Tri- oder Tetraglycidyläthern.

Andere geeignete Verbindungen mit Epoxidgruppen sind stickstoffhaltige Diepoxide, wie sie in der US-PS 33 65 471 beschrieben sind, Epoxidharze aus 1,1-Methylen - bis - (5-substituiertem Hydantoin) nach der US-PS 33 91 097, Diepoxide aus Bisimiden nach US-PS 34 50 711, epoxylierte Aminomethyl-di-phenyloxide nach US-PS 33 12 664, heterocyclische N,N'-Diglycicylverbindungen nach US-PS 35 03 979, Aminoepoxyphosphate nach GB-PS 11 72 916

oder 1,3,5-Triglycidylisocyanurate.

Besonders bevorzugt als Komponente $a_2$) sind die Phenolgruppen enthaltenden, praktisch epoxidgruppenfreien Umsetzungsprodukte von Diglycidyläthern des Bisphenol A oder mehrwertiger aliphatischer Alkohole, wie Pentaerythrit, Trimethylolpropan und Glycerin, mit Bisphenol A und gegebenenfalls Phenol. Solche Produkte weisen im allgemeinen Molekulargewichte von 650 bis 1300 und Epoxidwerte von 0,004 bis 0,001 auf und können beispielsweise bei Temperaturen zwischen 160 und 180°C, bei Anwesenheit von Reaktionskatalysatoren bei entsprechend niedrigen Temperaturen, hergestellt werden.

Die kondensierten Phenole $a_2$) enthalten aliphatisch gebundene Hydroxylgruppen. Zum Teil entstehen diese aus den Epoxidgruppen der Epoxidharze (E) bei deren Umsetzung mit den Bisphenolen (B) bzw. mit den Phenolen (P). Hydroxylgruppen können aber auch schon in den Epoxidharzen selbst enthalten sein, wenn diese durch Umsetzung von mehr als zweiwertigen Alkoholen (z.B. Pentaerythrit, Trimethylolpropan oder Glycerin) mit 2 Mol Epichlorhydrin hergestellt wurden.

Für den an sich bevorzugten Fall, daß Gemische der Komponenten ($a_1$) und ($a_2$) eingesetzt werden, liegt das Gewichtsverhältnis der beiden Komponenten zwischen 1 : 0,1 und 1 : 5.

Als sekundäre Amine ($a_3$), die mindestens eine Hydroxylalkylgruppe enthalten, eignen sich beispielsweise Alkyläthanolamine oder Alkylisopropanolamine mit 1 bis 6 Kohlenstoffatomen in der Alkylgruppe.

Bevorzugt sind jedoch Dialkanolamine von Alkoholen mit 2 bis 6 Kohlenstoffatomen, insbesondere Diäthanolamin sowie Gemische dieser Dialkanolamine mit Alkylalkanolaminen.

Die sekundären Amine ($a_3$), die in den Mannich-Basen (a) als Dialkanolaminomethylgruppen und Alkylalkanolaminomethylgruppen eingebaut sind, sind für den Grad der Dispergierbarkeit der Bindemittel in dem gewünschten pH-Bereich von 6,0 bis 10,2 und für die Vernetzung des Systems von wesentlicher Bedeutung.

Als sekundäre Dialkyl- oder Dialkoxyalkylamine ($a_4$), die zusammen mit den hydroxyalkylgruppenhaltigen Aminen ($a_3$) für die Herstellung der Mannich-Basen eingesetzt werden, eignen sich solche der allgemeinen Formel

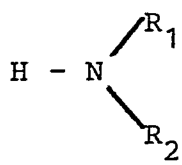

wobei $R_1$ und $R_2$ gleich oder verschieden sind und für einen geradkettigen oder verzweigten aliphatischen Rest mit 2 bis 10 Kohlenstoffatomen, der gegebenenfalls Alkoxygruppen enthält, stehen. Derartige geeignete sekundäre Amide sind beispielsweise Di-n-butylamin, Di-n-propylamin, Diisopropylamin, Di-n-pentylamin, Di-n-hexylamin, Di-n-octylamin, Di-2-äthylhexylamin und Di-2-alkoxyäthylamine wie z.B. Di-2-methoxy-, Di-2-äthoxy- oder Di-2-butoxyäthylamin sowie solche, in denen $R_1$ und $R_2$ zu einem Ring verknüpft sind, wie z.B. Morpholin oder Piperidin.

Bevorzugt geeignet sind Di-n-butylamin, Di-2-äthylhexylamin und Di-n-hexylamin. Die Wirkungsweise dieser sekundären Amine ($a_4$) liegt vornehmlich in der Beeinflussung der Stabilitätseigenschaften der Bindemittel, außerdem tragen Sie zum Verlauf und zur "inneren Weichmachung" der aus den Bindemitteln hergestellten Lackschichten bei. Sie leisten auch einen gewissen Beitrag zur Vernetzung.

Die sekundären Amine können unter anderem, bedingt durch ihre Herstellungsweise, auch Anteile entsprechender primärer Amine enthalten, doch sollte deren Anteil 20 Gewichtsprozent des sekundären Amins nicht übersteigen. Das Gewichtsverhältnis der Komponente ($a_3$) und ($a_4$) kann zwischen 1 : 10 und 1 : 0,1, vorzugsweise zwischen 1 : 2 und 2 : 1 liegen.

Als Formaldehyd bzw. Formaldehyd liefernde Verbindungen ($a_5$) werden wäßrige oder alkoholische, wie z.B. butanolische Formaldehydlösungen oder Paraformaldehyd oder deren Gemische verwendet.

Die Herstellung der Mannich-Basen (a) erfolgt nach den üblichen in der Literatur angegebenen Methoden (vgl. z.B. Houben-Weyl, Methoden der organischen Chemie, Band XI/1, Seite 731 (1957)), vorzugsweise durch Umsetzung bei Temperaturen zwischen 20 und 80°C. Die Verhältnisse der eingesetzten Ausgangsstoffe richten sich nach den jeweils angestrebten Eigenschaften, wobei das Molverhältnis der Komponenten ($a_1$) und ($a_2$) zu den Komponenten ($a_3$) und ($a_4$) bevorzugt 1 : 0,75 bis 1 : 3 ist.

Im allgemeinen wird aber auf jede phenolische Hydroxylgruppe etwa ein Mol sekundäres Amin eingesetzt. Die Menge an ($a_5$) beträgt mindestens ein Mol, bezogen auf ein Mol sekundäres Amin.

Die epoxidgruppenfreien Mannich-Basen (a) werden in einer Menge von 50 bis 90, vorzugsweise 60 bis 80 Gewichtsprozent, mit 5 bis 50, vorzugsweise 10 bis 30 Gewichtsprozent Epoxidharz - Komponente (b) - umgesetzt. Die Reaktion der Komponente (a) mit der Komponente (b) erfolgt im allgemeinen bei Temperaturen von 20 bis 100°C, vorzugsweise 60 bis 80°C, gegebenenfalls in Gegenwart von organischen Lösungsmitteln wie z.B. Alkoholen, Glykoläthern und Ketonen. Das erhaltene Reaktionsprodukt ist im wesentlichen epoxidgruppenfrei.

Die Umsetzung von (a) mit (b) zum Reaktionsprodukt ist in den Patentanmeldungen DE-OS 24 19 179, DE-OS 23 20 301, DE-OS 23 57 075, DE-OS 25 41 801 und DE-OS 25 54 080 beschrieben.

Als Epoxidharze (Komponente b) kommen vorzugsweise Polyepoxidverbindungen mit 2 bis 3 Epoxidgruppen im Molekül in Frage, wie z.B. Umsetzungsprodukte von mehrwertigen Phenolen,besonders solchen der unter ($a_1$) erwähnten Formel

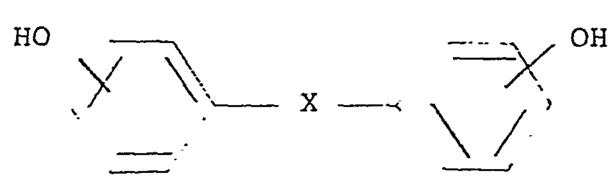

mit Epichlorhydrin; aber auch die oben erwähnten Reaktionsprodukte von mehrwertigen Alkoholen, wie z.B. Pentaerythrit, Trimethylolpropan oder Glycerin mit Epichlorhydrin; weiterhin epoxidgruppenhaltige Umsetzungsprodukte von Epoxidharzen mit sekundären Aminen oder hydroxylgruppenhaltigen Glykoläthern; ferner Epoxidharze, die Heteroatome, wie Schwefel, eingebaut enthalten.

Die Epoxidharze (b) enthalten im allgemeinen ebenfalls aliphatisch gebundene Hydroxylgruppen, insbesondere wenn bei der Umsetzung des mehrwertigen Alkolhols eine Kondensation zu höhermolekularen Produkten eingetreten war.

Ein Teil der aliphatisch gebundenen Hydroxylgruppen aus (a) oder (b) kann gegebenenfalls in Urethangruppen umgewandelt werden. Die Reaktion der Hydroxylgruppen mit den teilblockierten Polyisocyanaten kann in jedem beliebigen Stadium der Herstellung der Bindemittel erfolgen; bevorzugt werden die Epoxidharze umgesetzt. Dies kann sowohl mit den Epoxidharzen geschehen, welche die Komponente (b) darstellen, als auch mit den Epoxidharzen (E), welche zur Herstellung der Komponente ($a_2$) eingesetzt werden. Ferner ist es möglich, die fertige Komponente ($a_2$) direkt mit dem teilblockierten Polyisocyanat zur Reaktion zu bringen. Werden Epoxidharze auf Basis mehrwertiger aliphatischer Alkohole, z.B. Pentaerythrit, verwendet, dann erfolgt der Angriff des Isocyanats bevorzugt an der freien primären Alkoholgruppe, erst in zweiter Linie reagiert die sekundäre Alkoholgruppe, die aus dem Epoxidring gebildet worden war.

Phenolische Hydroxylgruppen bleiben unter den gewählten Bedingungen im wesentlichen erhalten. Auch eventuell vorhandene Amino- oder Iminogruppen können mit den teilblockierten Polyisocyanaten reagieren, was in manchen Fällen erwünscht sein kann.

Die Reaktion wird üblicherweise bei Temperaturen von 50°C bis 120°C, vorzugsweise von 70° bis 100°C vorgenommen, wobei übliche Katalysatoren für die Polyurethan-Bildung, wie z.B. Dibutylzinndilaurat, anwesend sein können. Es wird in Abwesenheit von polaren Lösungsmitteln gearbeitet; vorzugsweise wird die Umsetzung in der Schmelze vorgenommen, es können jedoch auch inerte Verdünnungsmittel zugegen sein.

Als teilblockierte Polyisocyanate sind aromatische Diisocyanate, wie Toluylendiisocyanate oder Xylylendiisocyanate oder deren Dimere und Trimere besonders geeignet. Es können jedoch auch aliphatische Diisocyanate, wie Hexamethylendiisocyanat, verwendet werden; außerdem Präpolymere, die durch Umsetzung von Polyolen oder Polyätherpolyolen mit einem Überschuß an Polyisocyanaten hergestellt werden. Als Blockierungsmittel kommen bevorzugt aliphatische Alkohole in Frage, die geradkettig, verzweigt oder ringförmig vorliegen können, wie z.B. Methanol, Äthanol, n-, iso- oder tert.-Butanol, Hexanol, Äthylhexanol, Furfurylalkohol, Cyclohexanol, Alkylglykole, Alkyldiglykole und Alkyltriglykole. Aber auch andere bekannte Blockierungsmitteln, wie Oxime, Lactame, Ketone oder Malonester können verwendet werden.

Es ist. ohne weiteres möglich, nur einen Teil der Mannich-Basen (a) bzw. der Epoxidharze (b) mit Polyisocyanaten zu modifizieren: Sei es, daß nebeneinander Epoxidverbindungen mit und ohne aliphatische Hydroxylgruppen vorliegen, sei es, daß nach erfolgter Umsetzung mit Polyisocyanat weitere, unmodifizierte Epoxidverbindungen zugegeben werden.

Die Mengenverhältnisse bei der Reaktion mit den teilblockierten Polyisocyanaten werden bevorzugt so gewählt, daß auf ein Mol basischen Stickstoff im fertigen Reaktionsprodukt 0,01 bis 1,0, vorzugsweise 0,05 bis 0,5 Mol Urethangruppen kommen, wobei sowohl die Urethanbindung zwischen Reaktionsprodukt und Polyisocyanat als auch diejenige zwischen Blockierungsmittel und Polyisocyanat gerechnet wird.

Der gesamte Aufbau des Reaktionsproduktes erlaubt die Bildung eines Metallkomplexes, insbesondere einer Kupferkomplexverbindung. Zu ihrer Herstellung kann man auf verschiedene Art verfahren. So kann die Lösung eines Kupfersalzes direkt der letzten Stufe bei der Herstellung des Reaktionsproduktes zugegeben und mit diesem zur Reaktion gebracht werden. Andererseits kann aber auch eine wäßrige Kupfersalzlösung dem in Lösung befindlichen fertigen Reaktionsprodukt zugemischt werden. In beiden Fällen entsteht eine grün gefärbte Metallkomplex-Verbindung des Reaktionsproduktes aus epoxidgruppenfreien Mannich-Basen und Epoxidharzen. Die Absorptionsbanden, gemessen im Spektralfotometer DK2 der Firma Beckmann Instruments, liegen im Bereich zwischen 350 nm und 500 nm. Sie variieren je nach der Zusammensetzung der Mannich-Base innerhalb dieses Bereiches.

Im Vergleich hierzu liefern Ausgangsstoffe, die zur Herstellung des Reaktionsproduktes benötigt werden, keine Absorptionsbanden in dem vorstehend genannten Bereich. Di-n-butylamin und Di-n-hexylamin geben keine Komplexverbindungen mit Kupfersalzen. Die Lösung in Wasser bleibt farblos und es werden keine Absorptionsbanden registriert. Mit z.B. Diäthanolamin entsteht nach Zugabe von Kupfersalzen eine stark violett gefärbte Verbindung mit einer Absorption von 607 nm.

Zur Herstellung der erfindungsgemäßen Metallkomplex-Verbindungen werden in der Regel solche Metallsalze verwendet, die leicht zugänglich sind und bei denen die Wertigkeit der Metalle so gewählt wird, daß die Salze in der beständigsten Form vorliegen,z.B. Kupfer als Kupfer (II) - acetat, Kupfer (II)-sulfat, Kupfer (II)-nitrat.

Enthält die Metallkomplex-Verbindung 0,5 bis 0,6 Gewichtsteile Kupfer, bezogen auf 1000 Gewichtsteile Reaktionsprodukt, so wird die maximale Farbstärke erreicht. Bei geringeren Kupfermengen sind neben dem Metallkomplex noch nicht umgesetztes Reaktionsprodukt vorhanden, aber es ist auch möglich, daß nicht sämtliche zur Komplexbildung befähigte Gruppen des Reaktionsproduktes mit Kupfer komplex gebunden sind, so daß bei geringerem Kupfergehalt Mischungen verschiedener Metallkomplex-Verbindungen vorhanden sind, deren Absorptionsbereich aber stets zwischen 350 nm und 500 nm liegt. Das Säure-Anion des Kupfersalzes wird gleichzeitig zum Protonisieren der Metallkomplex-Verbindung mit eingebaut.

Das erfindungsgemäße Kunstharz in Form der Metallkomplex-Verbindung ist in seiner protonisierten Form mit Wasser verdünnbar. Nach Bedarf können zusätzliche Lösungsmittel, wie beispielsweise Alkohole, wie Isopropanol, Propanol, Butanol, Glykole, Glykoläther, wie Äthylenglykol, Propylenglykol, Äthylenglykol-mono-äthyläther, Äthylenglykol-mono-propyläther, Äthylenglykol-mono-butyläther oder auch andere, wie Tetrahydrofuran, aliphatische und/oder aromatische Kohlenwasserstoffe, Ester, Äther, Ätherester mit verwendet werden, um die Lösungseigenschaften und Dispergiereigenschaften im Beschichtungsbad günstig zu beeinflussen.

Entweder sind die erfindungsgemäßen Metallkomplex-Verbindungen als kationische Filmbildner in dem wäßrigen Beschichtungsbad allein vorhanden oder in Kombination mit anderen in Wasser löslichen bzw. in Wasser dispergierbaren und im Gemisch mit den Metallkomplex-Verbindungen kathodisch abscheidbaren Kunstharzen. Als solche eignen sich beispielsweise Aminoplastkondensate, Phenoplastkondensate, Epoxidharze, Alkydharze, Polyurethane oder Gemische solcher und anderer Kunstharze. Die Gewichtsmenge dieser zusätzlichen anderen Kunstharze soll zweckmäßigerweise im allgemeinen nicht größer sein als die Gewichtsmenge der Salze der kathodisch abscheidbaren Metallkomplex-Verbindungen.

Wie in anderen Überzugsmitteln üblich, kann das Beschichtungsbad ebenfalls elektrophoretisch abscheidbare Hilfsstoffe enthalten, wie beispielsweise Pigmente, Füllstoffe, Härtungskatalysatoren, Mittel zur Verbesserung des Verlaufs, Antischaummittel, Haftverbesserungsmittel und andere.

- 18 -

Die wäßrige Dispersion des protonisierten Metallkomplexes ist bevorzugt geeignet für die kataphoretische Abscheidung eines Überzuges auf einem elektrisch leitfähigen Substrat, das als Kathode in einem Elektrotauchlackierverfahren geschaltet ist.

Für die Durchführung der kathodischen Abscheidung wird die wäßrige Dispersion bis zu einem Festkörpergehalt zwischen 5 und 30 %, vorzugsweise zwischen 5 und 15 % mit Wasser herab verdünnt. Der pH-Wert liegt zwischen 7 und 9. Während der kathodischen Abscheidung wird die Dispersion bei Temperaturen zwischen 15 und 40°C gehalten. Das zu beschichtende Substrat wird in die Dispersion eingetaucht und als Kathode geschaltet. Als Anode wird in der Regel Graphit oder Edelstahl verwendet. Zwischen Kathode und Anode läßt man einen Gleichstrom durch das Bad fließen. Die Abscheidespannung liegt zwischen 2 und 400 Volt. Es scheidet sich hierbei auf der Kathode ein Überzug ab. Die Abscheidung wird durchgeführt, bis die gewünschte Schichtdicke erreicht ist.

Nach beendeter Beschichtung werden die beschichteten Substrat-Oberflächen aus dem Beschichtungsbad entfernt, zweckmäßigerweise mit deionisiertem Wasser gespült und zum Härten 5 bis 180 Minuten auf Temperaturen von 80 bis 250°C erhitzt, um eingebrannt zu werden. Hierbei sinkt bei steigender Temperatur die Einbrenndauer. Die besten Resultate werden erhalten bei Einbrenntemperaturen zwischen 120 und 190°C und Einbrennzeiten zwischen 10 und 40 Minuten.

Die nachfolgenden Beispiele sollen die Erfindung erläutern, ohne sie einzuschränken. Darin genannte Teile sind Gewichtsteile. Prozente sind Gewichtsprozente.

Beispiel 1 (Vergleichsversuch)

Zu 1100 Teilen (4,8 Mole) Bisphenol A, 917,5 Teilen (8,7 Mole) Diäthanolamin, 332,5 Teilen (2,5 Mole) Di-2-methoxyäthylamin und 375 Teilen Isopropanol werden bei 20 bis 25°C 984 Teile (13,1 Mole) Formalin 40%-ig zugetropft. Man läßt eine Stunde unter Stickstoff-Atmosphäre bei 30°C rühren und erhitzt dann 3 Stunden auf 80°. Unter schwachem Vakuum werden Isopropanol und Wasser abdestilliert. Man erhält eine gelbe harzähnliche Masse mit einem Festgehalt von 91%. Hiervon werden 2542 Teile mit 70 Teilen Paraformaldehyd versetzt und 9 bis 10 Stunden bei 70°C unter Stickstoff-Atmosphäre kondensiert. Es wird eine Mannich-Base (Komponente a) in Form einer viskosen Masse mit einem Festgehalt von 90 % erhalten.

Hiervon werden 544 Teile der Mannich-Base mit 136,5 Teilen eines handelsüblichen Reaktionsproduktes aus Bisphenol A und Epichlorhydrin (Epoxidwert: 0,2) (Epoxidharz Epoxy 1/33 der Firma Chemapol) und 54,5 Teilen eines handelsüblichen Reaktionsproduktes aus Pentaerythrit und Epichlorhydrin (Epoxidwert: 0,57) Epoxin 162, BASF AG) unter Verwendung von 34 Teilen Dimethylglykoläther 3 Stunden bei 60°C zur Reaktion gebracht.

Man erhält ein klares viskoses Harz mit einem mittleren Molekulargewicht von 860 und einem Restformaldehydgehalt von 0,3 %. Der Festkörper beträgt 70 %. Das Harz läßt eine Absorption im Photometer DK2 (Firma Beckmann Instruments) gemessen, nicht erkennen.

Beispiel 2

Beipiel 1 wird wiederholt mit dem Unterschied, daß 544 Teile der Mannich-Base mit 136,5 Teilen des handelsüblichen Reaktionsproduktes aus Bisphenol A und Epichlorhydrin, 54,5 Teilen des handelsüblichen Reaktionsproduktes aus Pentaerythrit und Epichlorhydrin und 1 Teil einer wäßrigen Kupfer(II)-acetat-Lösung, die 0,4 Teile Cu-Ionen enthält unter Verwendung von 33 Teilen Dimethylglykoläther 3 Stunden bei 60°C zur Reaktion gebracht werden.

Das erhaltene Harz hat eine grüne Farbe. Der Festkörper beträgt 70 %. Im Photometer DK2 gemessen, zeigt es eine Absorptionsbande bei 375 nm.

Beispiel 3

Beispiel 1 wird wiederholt mit dem Unterschied,daß man der fertigen Harzlösung mit 70% Festkörper noch unter sehr intensivem Rühren 1 Teil einer wäßrigen Kupfer(II)-acetat-Lösung, die 0,3 Teile Cu-Ionen enthält, zumischt.

Es entsteht eine Harzlösung mit grüner Farbe. Im Photometer DK2 gemessen, zeigt es eine Absorptionsbande bei 378 nm.

## Beispiel 4

Unter Stickstoff als Schutzgas werden zu 375,0 Teilen (1,65 Mol) Bisphenol A 260,0 Teilen (2,48 Mol) Diäthanolamin, 215,0 Teilen (1,67 Mol) Di-n-butylamin und 200 Teilen Isopropanol 533 Teile (4,25 Mol) 24%ige Formaldehydlösung in Isobutanol bei 20 bis 25°C zugetropft. Danach wird der Ansatz 30 Minuten bei 30°C gerührt und dann 3 Stunden auf 80°C erhitzt. Danach werden 150,0 Teile eines handelsüblichen Reaktionsproduktes aus Pentaerythrit und Epichlorhydrin (Epoxidwert: 0,57) und 375 Teile eines handelsüblichen Reaktionsproduktes aus Bisphenol A und Epichlorhydrin (Epoxidwert: 0,2) zugesetzt, die zusammen 1,61 Moläquivalenten an Epoxidgruppen entsprechen, und der Ansatz 5 Stunden bei 70°C gehalten, 170,0 Teile eines Acetylendiharnstoff-Formaldehydkondensationsproduktes und 1 Teil einer wäßrigen Kupfer(II)-sulfat-lösung, die 0,62 Teile Cu-Metall enthält, eingerührt. Man erhält ein klares grünstichiges Harz mit einem Festgehalt von 67,3 %. Das mittlere Molekulargewicht liegt bei 1000 bis 1300. Im Photometer DK2 gemessen, zeigt es eine Absorptionsbande bei 405 nm.

Beispiel 5

Es werden 4 Beschichtungsbäder hergestellt, die sich nur dadurch unterscheiden, daß anstelle des nach Beispiel 1 erhaltenen Harzes, Harze der Beispiele 2,3 oder 4 eingesetzt werden.

Zur Herstellung der Beschichtungsbäder werden 385 Gewichtsteile des Harzes gemäß Beispiel 1 (Ansatz a) oder des Beispiels 2 (Ansatz b) oder des Beispiels 3 (Ansatz c) oder des Beispiels 4 (Ansatz d) mit 2 Gewichtsprozent Eisessig, bezogen auf den Festkörper des Harzes, neutralisiert. Anschließend werden 221 Gewichtsteile einer auf einem Dreiwalzstuhl homogenisierten Pigmentpaste zugegeben, die sich zusammensetzt aus

| | | |
|---|---|---|
| 366 | Gewichtsteilen | eines der Harze gemäß Beispiel 1, 2, 3 oder 4, |
| 174 | Gewichtsteilen | Talkum, |
| 45 | Gewichtsteilen | Ruß, |
| 90 | Gewichtsteilen | aliphatischer Fettalkohole mit 10 bis 14 C-Atomen, |
| 325 | Gewichtsteilen | Isopropanol, |

wobei die Paste mit dem Harz gemäß Beispiel 1 zum Ansatz a, die Paste mit dem Harz gemäß Beispiel 2 zum Ansatz b, die Paste mit dem Harz gemäß Beispiel 3 zum Ansatz c und die Paste mit dem Harz gemäß Beispiel 4 zum Ansatz d gemischt wird.

Die Mischungen werden mit deionisiertem Wasser auf einen Festkörpergehalt 12 Gewichtsprozent verdünnt und vor Beginn der Abscheidung 48 Stunden bei 30°C gerührt. Der pH-Wert des verdünnten Beschichtungsbades beträgt 7,9. Jedes Beschichtungsbad wird in 2 Teile geteilt.

In den einen Teil wird als Kathode ein entfettetes Stahlblech (a) und in den anderen Teil als Kathode ein zinkphosphatisiertes Stahlblech (b) eingetaucht.

Mit beiden Beschichtungsbädern wird dann auf gleiche Weise weitergearbeitet:

Nach dem Eintauchen der Kathoden wird 2 Minuten lang bei einer Gleichspannung von 220 Volt beschichtet. Das Beschichtungsbad wird während der Abscheidung auf einer Temperatur von 30°C gehalten. Anschließend werden die beschichteten Kathoden aus dem Beschichtungsbad genommen, mit deionisiertem Wasser gespült und mit Luft abgeblasen. Danach werden die Bleche 20 Minuten bei 190°C eingebrannt. Der eingebrannte Überzug auf dem entfetteten Stahlblech (a) hat eine Schichtdicke von 26 µm; der eingebrannte Überzug auf dem zinkphosphatierten Blech weist eine Schichtdicke von 16 µm auf. Das zinkphosphatierte Stahlblech besaß eine Zinkphosphatschicht von ca 2 $g/m^2$.

Die Korrosionsschutzwerte der nach a und b erhaltenen Überzüge sind in der nachfolgenden Tabelle angegeben.

| Ansatz | Unterrostung in mm nach ASTM-B-117-64 | | |
|---|---|---|---|
| | entfettetes Stahlblech (a) | | Zinkphosphatiertes Stahlblech (b) |
| | 96 h | 168 h | 240 h |
| a (Vergleichsansatz) | >10 | >15 | 1,5 |
| b | 1,0 | 1,5 | 0,5 |
| c | 0,5 | 1,5 | 0,5 |
| d | 1,5 | 2 | 0,5 |

# PATENTANSPRÜCHE

1. Kunstharz in Form einer Metallkomplex-Verbindung, gekennzeichnet durch ein Reaktionsprodukt von

   (a) epoxidgruppenfreien Mannich-Basen aus

   ($a_1$) äthergruppenfreien kondensierten Phenolen mit mindestens zwei aromatischen Ringen und mindestens zwei phenolischen Hydroxylgruppen und/oder

   ($a_2$) äthergruppenhaltigen kondensierten Phenolen mit mindestens zwei aromatischen Ringen und mindestens einer phenolischen Hydroxylgruppe,

   ($a_3$) sekundären Aminen mit mindestens einer Hydroxyalkylgruppe, gegebenenfalls im Gemisch mit

   ($a_4$) sekundären Dialkyl- oder Dialkoxyalkylaminen ohne freie Hydroxylgruppen,

   ($a_5$) Formaldehyd oder Formaldehyd abspaltende Verbindungen

   mit

   (b) Epoxidharzen, wobei aus (a) und/oder (b) stammende aliphatische Hydroxylgruppen gegebenenfalls durch Umsetzung mit teilblockierten Isocyanaten mindestens teilweise in Urethangruppen überführt sind, in dem Metalle komplex gebunden sind.

2. Kunstharz nach Anspruch 1, dadurch gekennzeichnet, daß in dem Reaktionsprodukt Kupfer komplex gebunden ist.

3. Kunstharz nach Anspruch 2, dadurch gekennzeichnet, daß je 1000 Gewichtsteile Reaktionsprodukt 0,5 0,6 Gewichtsteile Kupfer gebunden sind.

4. Kunstharz nach den Ansprüchen 1 - 3, dadurch gekennzeichnet, daß das Reaktionsprodukt durch Säuren protonisiert ist.

5. Kunstharz nach den Ansprüchen 1 - 4, gekennzeichnet durch eine Absorptionsbande zwischen 350 und 500 nm.

6. Verfahren zur Herstellung des Kunstharzes gemäß der Ansprüche 1 - 5, dadurch gekennzeichnet, daß man eine Metallsalzlösung, insbesondere eine Kupfersalzlösung mit einer Lösung des Reaktionsproduktes in organischen Lösungsmitteln und/oder Wasser reagieren läßt.

7. Verwendung des Kunstharzes gemäß den Ansprüchen 1 - 5 zum Herstellen von Einbrennüberzügen auf der Oberfläche von als Kathode geschalteten elektrisch leitfähigen Substraten durch kathodische Abscheidung aus einem Tauchbad in einem kathodischen Elektrotauchlackierverfahren.

0055826

Europäisches Patentamt

# EUROPÄISCHER RECHERCHENBERICHT

Nummer der Anmeldung

EP 81 10 9710

| EINSCHLÄGIGE DOKUMENTE | | | KLASSIFIKATION DER ANMELDUNG (Int. Cl. 3) |
|---|---|---|---|
| Kategorie | Kennzeichnung des Dokuments mit Angabe, soweit erforderlich, der maßgeblichen Teile | betrifft Anspruch | |
| A | FR - A - 2 293 501 (BASF)<br>* Seite 15, Ansprüche 1-4 *<br>-- | 1-4,7 | C 08 G 59/62<br>18/06<br>C 09 D 5/40<br>C 25 D 13/06 |
| A | CHEMICAL ABSTRACTS, Band 79, Nr. 16, 22. Oktober 1973, Seite 74, Nr. 93559h<br>Columbus, Ohio, U.S.A.<br>& SU - A - 379 683 (INSTITUTE OF COLLOIDAL AND WATER CHEMISTRY, ACADEMY OF SCIENCES, UKRAINIAN S.S.R.) 20-04-1973<br>* Zusammenfassung *<br>-- | 1,7 | RECHERCHIERTE SACHGEBIETE (Int. Cl.3)<br>C 08 G 59/12<br>C 09 D 5/40<br>C 08 L 63/00 |
| A | FR - A - 2 333 838 (BASF)<br>* Seite 15, Anspruch 1 * | 1,7 | |
| D | & DE - A - 2 554 080<br>---- | | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt

| Recherchenort | Abschlußdatum der Recherche | Prüfer |
|---|---|---|
| Den Haag | 25-03-1982 | GIRARD |